# EUROPEAN PATENT APPLICATION

(11) **EP 3 121 626 A1**
(43) Date of publication of application: **25.01.2017**
(21) Application number: 15002982.5
(22) Date of filing: 20.10.2015
(51) Int. Cl.: G02B 3/08, F21V 5/00, G02B 5/02, G02B 27/09, G09F 13/02, G09F 13/04, G02B 19/00, F21W 111/02, G02B 3/00

(54) **REFRACTION LENS AND PLATE-FORM STRUCTURE WHICH HAS MULTIPLE REFRACTION LENSES EXTENDING THERETHROUGH**

(30) Priority: 23.07.2015 TW 104211899
(71) Applicant: Hu, Lieh-Hsiung, Taichung City (TW)
(72) Inventor: HU, Lieh-Hsiung, Taichung City (TW); TSAI, Shui-Tien, Taichung City (TW); LIN, Yu-Hsiang, New Taipei City (TW)
(74) Representative: Zeitler Volpert Kandlbinder Patent- und Rechtsanwälte Partnerschaft mbB

(57) **Abstract**

A refraction lens is integrally formed by transparent material including glass and acrylic. The refraction lens includes a body, wherein an incidence face and a light emitting face respectively formed on two opposite sides of the body. In the preferred embodiment, the body is a cylindrical structure, the incidence face is convex structure and the emitting face has at least one collecting unit formed thereon. The at least one collecting unit includes multiple collecting portions arranged in array, wherein each collecting portion is peripherally protruded from the emitting face. Each correcting portion is formed with a curved top for providing a dotted collecting effect.

## Description

### BACKGROUND OF THE INVENTION

### 1. Field of the Invention

The present invention relates to a refraction lens and a plate-form structure, and more particularly to a plate-form structure that has multiple refraction lenses extending therethrough.

### 2. Description of Related Art

In our daily life, some plate-form structures, including a traffic sign, a billboard, a signboard and the like, use LEDs for promoting their brightness and visibility at night or when the weather is not good. The LEDs is operated at night or when the weather is not good for saving power. However, according to the experience of viewing the plate-form structures, the visibility of the objects on the plate-form structure is changed due to the different sunshine angles even under a sunny day when being in a backlight condition.

In view of this, some refraction lenses are marketed. However, the conventional refraction lenses provide a planar bright effect. Consequently, the brightness provided by the conventional refraction lens may be smudged when the light source is weak.

The present invention has arisen to mitigate and/or obviate the disadvantages of the conventional refraction lens.

### SUMMARY OF THE INVENTION

The main objective of the present invention is to provide an improved refraction lens that provides a dotted collecting effect.

To achieve the objective, the refraction lens in accordance with the present invention is integrally formed by transparent material including glass and acrylic. The refraction lens includes a body, wherein an incidence face and a light emitting face respectively formed on two opposite sides of the body. In the preferred embodiment, the body is a cylindrical structure, the incidence face is convex structure and the emitting face has at least one collecting unit formed thereon. The at least one collecting unit includes multiple collecting portions arranged in array, wherein each collecting portion is peripherally protruded from the emitting face. Each correcting portion is formed with a curved top for providing a dotted collecting effect.

Further benefits and advantages of the present invention will become apparent after a careful reading of the detailed description with appropriate reference to the accompanying drawings.

### BRIEF DESCRIPTION OF THE DRAWINGS

Fig. 1 is a perspective view of a refraction lens in accordance with the present invention;
Fig. 2 is a side plan view of the refraction lens in Fig. 1;
Fig. 3 is an operational view of the refraction lens in Fig. 1;
Fig. 4 is a front plan view of the refraction lens in Fig. 1;
Fig. 5 is a front plan view of a second embodiment the refraction lens in accordance with the present invention;
Fig. 6 is a front plan view of a third embodiment the refraction lens in accordance with the present invention;
Fig. 7 is a front plan view of a fourth embodiment the refraction lens in accordance with the present invention;
Fig. 8 is a cross-sectional view of a second embodiment of the collecting unit of the refraction lens in accordance with the present invention;
Fig. 9 is a cross-sectional view of a third embodiment of the collecting unit of the refraction lens in accordance with the present invention;
Fig. 10 is a perspective view of a fourth embodiment of the collecting unit of the refraction lens in accordance with the present invention;
Fig. 11 is a partially cross-sectional view of the refraction lens in Fig. 10;
Fig. 12 is a front plan view of a plate-form structure in accordance with the present invention; and
Fig. 13 is partially cross-sectional view of the plate-form structure in fig. 12.

### DETAILED DESCRIPTION OF THE INVENTION

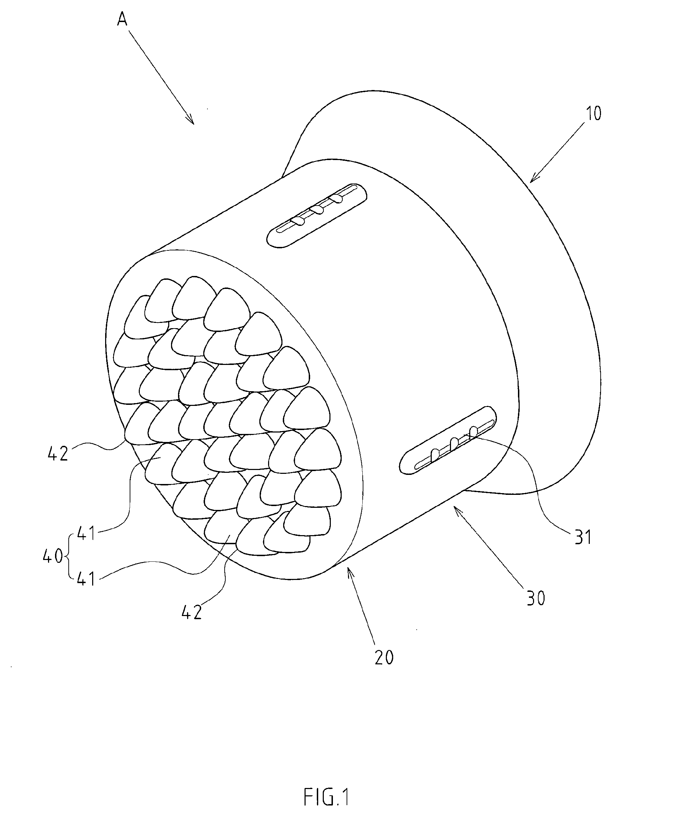

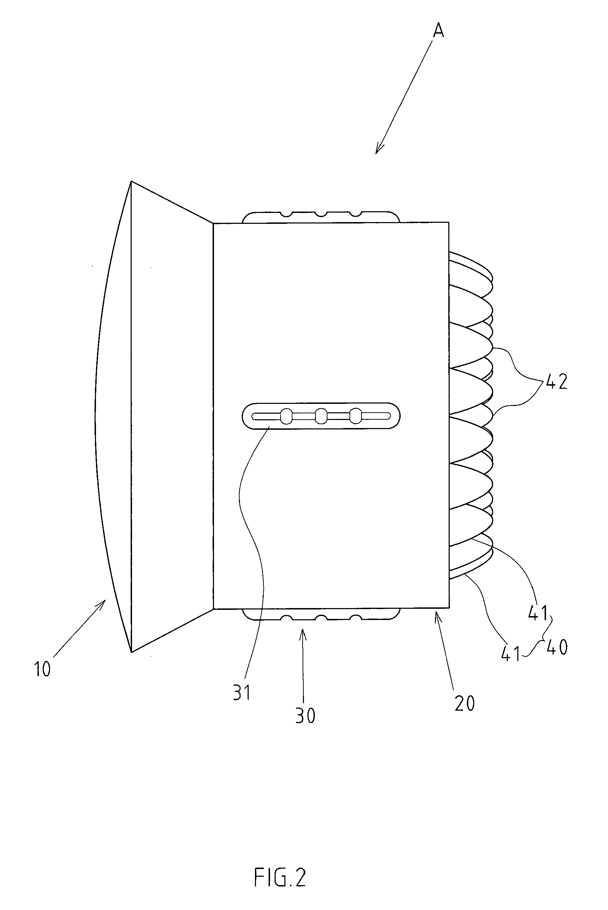

Referring to the drawings and initially to Figs. 1-4, a refraction lens A in accordance with the present invention is integrally formed by transparent material including glass and acrylic. The refraction lens A comprises a body 30, wherein an incidence face 10 and a light emitting face 20 respectively formed on two opposite sides of the body 30. In the preferred embodiment, the body 30 is a cylindrical structure, the incidence face 10 is convex structure and the emitting face 20 has at least one collecting unit 40 formed thereon. The at least one collecting unit 40 includes multiple collecting portions 41 arranged in array, wherein each collecting portion 41 is peripherally protruded from the emitting face 20. Each correcting portion 41 is formed with a curved top 42 for providing a dotted collecting effect.

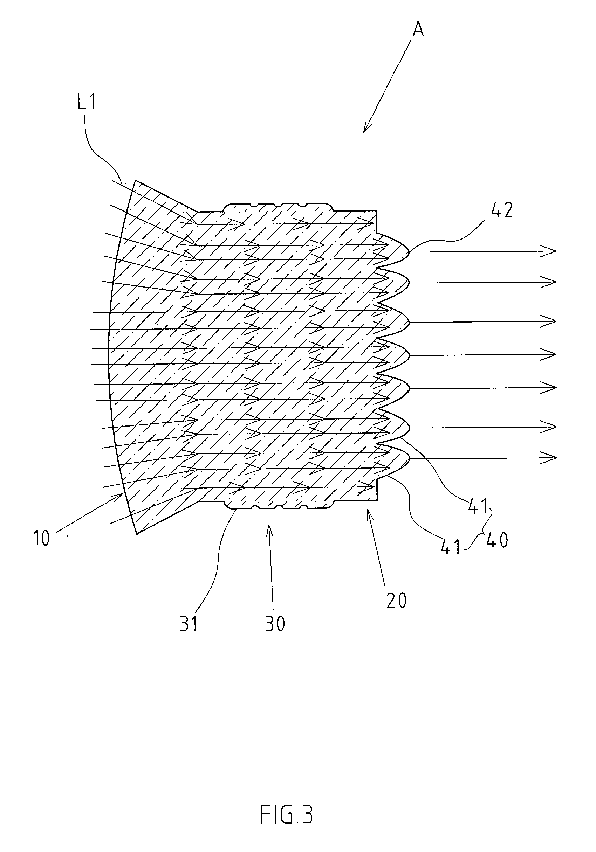

With reference to Fig. 3, the incident luminous beam penetrates the convex incidence face 10 along the arrow L1 in Fig. 3 and the refract luminous beam is projected after passing through body 30 and penetrating each collecting portion of the at least one collecting unit 40 on the light emitting face 20. In the refraction procedures, the curved cross-section of the top portion 42 of each of the collecting portions 41 provides the dotted focus effect such that the refraction lens A in accordance with the present invention transforms the conventional planar collecting effect into dotted collecting effect for providing sharpness on visibility. As a result, the refraction lens A provides an ideal bright visibility due to the dotted collecting effect when the incident luminous beam is weak.

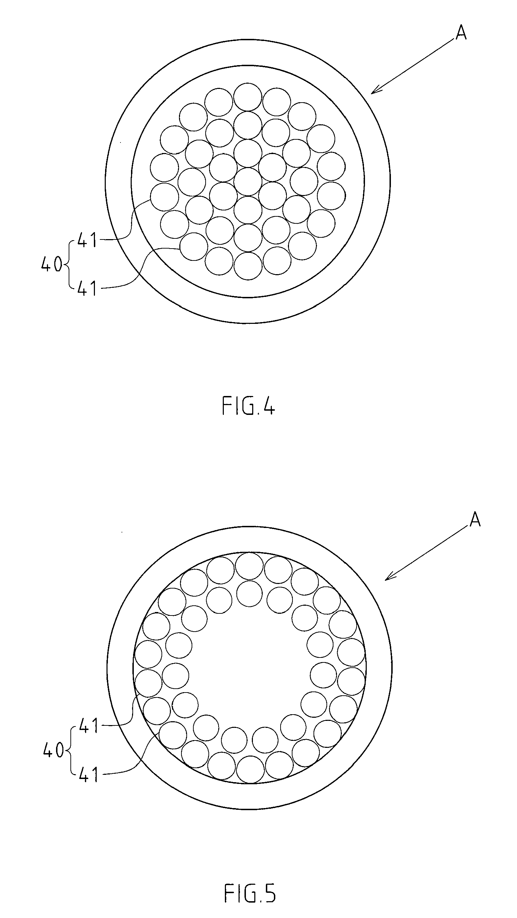

With reference to Figs. 4, 5 and 6, the collecting portions 41 of each of the multiple collecting units 40 is arranged into an array selected from a group consisted of round array, annular array, polygonal array, linear array and a curved array.

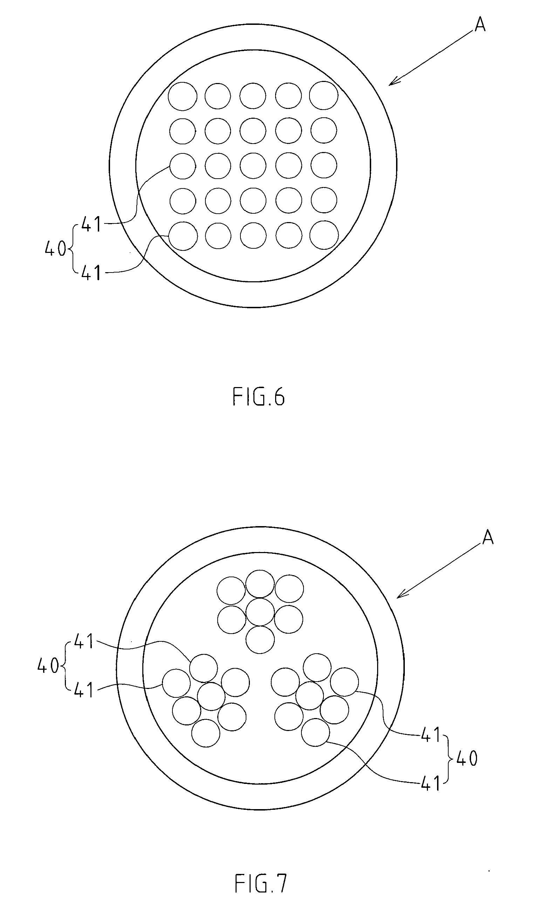

As shown in Fig. 7, the refraction lens A in accordance with the present invention includes multiple collecting units 40 formed on the light emitting face 20. Consequently, the linear arrays and the curved arrays are further radially arranged.

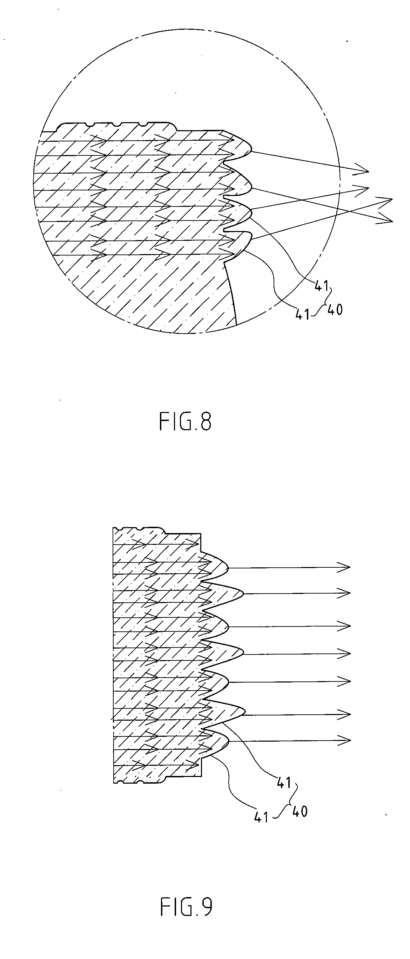

With reference to Fig. 8, at least one curved top 42 of the multiple collecting portions 41 are inclined relative to the light emitting face 20 for getting offset collecting effect. For example, the curved tops 42 of the multiple collecting portions 41 downward extend or the curved tops 42 of the multiple collecting portions 41 extend toward an axis.

With reference to Fig. 9, the height of each of the collecting portion is different from one another relative to the light emitting face 20 such that the curved tops 42 provides collecting effects with different collecting intensities.

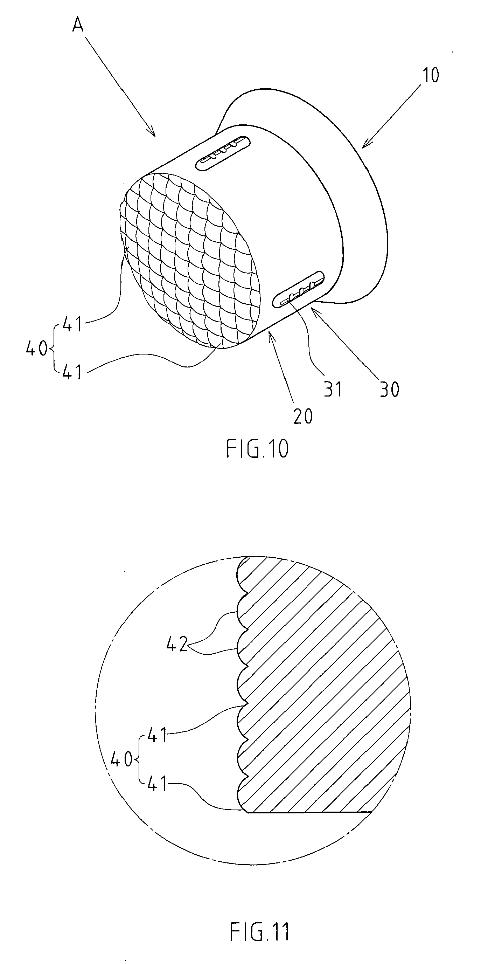

With reference to Figs. 10 and 11, each collecting portion 41 has a lower portion integrally connected to one another and the curved top 42 of each of the collecting portion 41 has a smaller curvature smaller than of the hereinbefore curved tops 42.

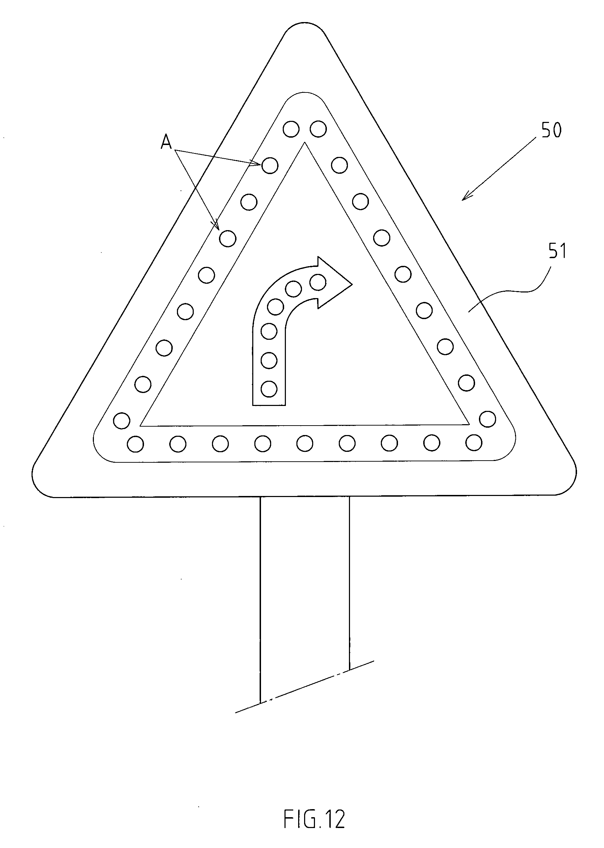

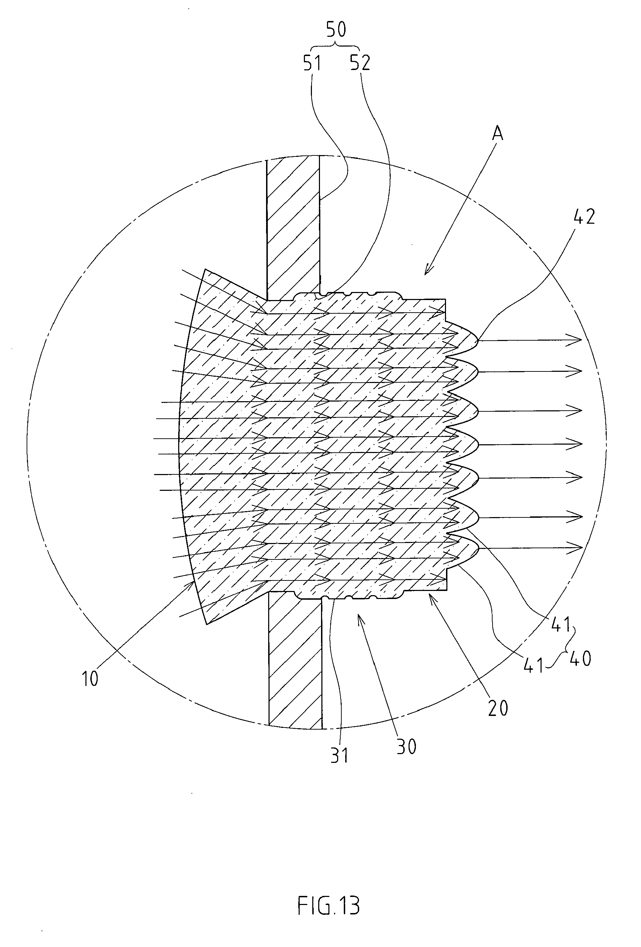

With reference to Figs. 12 and 13, a plate-form structure 50 in accordance with the present invention includes a panel 51 having multiple through holes 52 defined therein, wherein each through hole 52 has a refraction lens A extending therethrough. Further with reference to Figs. 1 to 4, the refraction lens A comprises a body 30 received in a corresponding one of the through hole 52, wherein an incidence face 10 and a light emitting face 20 respectively formed on two opposite sides of the body 30. In the preferred embodiment, the body 30 is a cylindrical structure, the incidence face 10 is convex structure and the emitting face 20 has at least one collecting unit 40 formed thereon. The at least one collecting unit 40 includes multiple collecting portions 41 arranged in array, wherein each collecting portion 41 is peripherally protruded from the emitting face 20. Each correcting portion 41 is formed with a curved top 42 for providing a dotted collecting effect.

The plate-form structure 50 is selected from a group consisted of a traffic sign, a billboard, a signboard, a lamp and a decorative light.

The panel 51 of the plate-form structure 50 is planar or curved and the material of the panel 51 is selected from a group consisted of a hard plate, a flexible plate, a net and a drapery.

The refraction lens A includes at least one positioning structure 31 formed on the periphery of the body 30, wherein the at least one positioning structure 31 is selected from the group consisted of protruding structure, inclined structure, teethed structure and resilient structure.

As described above, the emitting face 20 has at least one collecting unit 40 formed thereon and the at least one collecting unit 40 includes multiple collecting portions 41 and a curved top 42 formed on the top of each of the collecting portions41. The curved cross-section of the top portion 42 of each of the collecting portions 41 provides the dotted focus effect such that the refraction lens A in accordance with the present invention transforms the conventional planar collecting effect into dotted collecting effect for providing sharpness on visibility.

Although the invention has been explained in relation to its preferred embodiment, it is to be understood that many other possible modifications and variations can be made without departing from the spirit and scope of the invention as hereinafter claimed.

## Claims

1. A refraction lens integrally formed by transparent material and comprising a body, wherein an incidence face and a light emitting face respectively formed on two opposite sides of the body, the body being a cylindrical structure, the incidence face being a convex structure and the emitting face having at least one collecting unit formed thereon, the at least one collecting unit including multiple collecting portions arranged in a array, wherein each collecting portion is peripherally protruded from the emitting face and each correcting portion is formed with a curved top for providing a dotted collecting effect.

2. The refraction lens as claimed in claim 1, wherein the collecting portions of the at least one collecting unit is arranged into an array selected from a group consisted of round array, annular array, polygonal array, linear array and a curved array.

3. The refraction lens as claimed in claim 2, wherein at least one curved top of the multiple collecting portions are inclined relative to the light emitting face for getting offset collecting effect.

4. The refraction lens as claimed in claim 2, wherein each collecting portion has a height and the height of each of the collecting portion is different from one another relative to the light emitting face such that the curved tops provide collecting effects with different collecting intensities.

5. The refraction lens as claimed in claim 2, wherein each collecting portion has a lower portion integrally connected to one another.

6. The refraction lens as claimed in claim 1 further comprising at least one positioning structure formed on the periphery of the body, wherein the at least one positioning structure is selected from the group consisted of protruding structure, inclined structure, teethed structure and resilient structure.

7. A plate-form structure comprising a panel having multiple through holes defined therein, wherein each through hole has a refraction lens extending therethrough, the refraction lens integrally formed by transparent material and comprising a body, wherein an incidence face and a light emitting face respectively formed on two opposite sides of the body, the body being a cylindrical structure, the incidence face being a convex structure and the emitting face having at least one collecting unit formed thereon, the at least one collecting unit including multiple collecting portions arranged in a array, wherein each collecting portion is peripherally protruded from the emitting face and each correcting portion is formed with a curved top for providing a dotted collecting effect.

8. The plate-form structure as claimed in claim 7, wherein the plate-form structure is selected from a group consisted of a traffic sign, a billboard, a signboard, a lamp and a decorative light.

9. The plate-form structure as claimed in claim 8, wherein the panel of the plate-form structure is planar and the material of the panel is selected from a group consisted of a hard plate, a flexible plate, a net and a drapery.

10. The plate-form structure as claimed in claim 8, wherein the panel of the plate-form structure is curved and the material of the panel is selected from a group consisted of a hard plate, a flexible plate, a net and a drapery.

11. The refraction lens as claimed in claim 7, wherein the collecting portions of the at least one collecting unit is arranged into an array selected from a group consisted of round array, annular array, polygonal array, linear array and a curved array.

12. The refraction lens as claimed in claim 8, wherein at least one curved top of the multiple collecting portions are inclined relative to the light emitting face for getting offset collecting effect.

13. The refraction lens as claimed in claim 8, wherein each collecting portion has a height and the height of each of the collecting portion is different from one another relative to the light emitting face such that the curved tops provide collecting effects with different collecting intensities.

14. The refraction lens as claimed in claim 8, wherein each collecting portion has a lower portion integrally connected to one another.

15. The refraction lens as claimed in claim 7 further comprising at least one positioning structure formed on the periphery of the body, wherein the at least one positioning structure is selected from the group consisted of protruding structure, inclined structure, teethed structure and resilient structure.
